# EUROPEAN PATENT APPLICATION

(11) **EP 4 451 041 A1**
(43) Date of publication of application: **23.10.2024**
(21) Application number: 23168505.8
(22) Date of filing: 18.04.2023
(51) Int. Cl.: G02B 27/01, F21V 8/00, G02B 19/00

(54) **HEAD-UP DISPLAY UNIT**

(71) Applicant: Continental Automotive Technologies GmbH, 30175 Hannover (DE)
(72) Inventor: Dr. Junge, Christian, 60488 Frankfurt am Main (DE); Wang, Limei, 60488 Frankfurt am Main (DE); Park, SangOh, 60488 Frankfurt am Main (DE); Bang, WooSeok, 60488 Frankfurt am Main (DE)
(74) Representative: Continental Corporation

(57) **Abstract**

A head-up display unit (1) according to the invention comprises
- a picture generating unit (10) for creating an image to be displayed as a virtual image (VB) to a viewer,
- an optical unit (14) for projecting the image to be displayed towards an eyebox (4), the picture generating unit (10) comprising
- a two-dimensional array (131) of light sources (132),
- an array (117) of reflectors (17,17') for collimating light emitted by the light sources (132), each of these reflectors (17,17') having tapered sidewalls (171, 172, 173, 175),
- a display panel (11) for receiving collimated light from the array (117) of reflectors (17,17') for modulating the received light with image information, and for emitting said modulated light (SB1) as image to be displayed.

Advantageously each reflector (17,17') consists of a transparent solid-state body, having a light entrance surface (171), a light exit surface (176) and tapered light reflecting sidewalls (172, 173, 174, 175).

## Description

The present invention is related to a head-up display unit, especially to a head-up display unit being provided with a picture generating unit having a two-dimensional array of light sources that can be dimmed independently of each other. The invention is further related to a vehicle comprising such a head-up display.

A head-up display, also referred to as a HUD, is a display system in which the viewer can maintain his viewing direction, because the contents to be displayed are displayed in his field of vision. While such systems, due to their complexity and costs, were originally mainly used in the aviation sector, they are now also being used in large scale in the automotive sector, as they allow for easy reading of critical information without the need to change the eye gaze from the road to an in-cabin instrument cluster.

Head-up displays generally consist of a picture generating unit (PGU), an optical unit and a mirror unit. The picture generating unit generates the image to be displayed. The optical unit directs the image to the mirror unit. The mirror unit is a partially reflecting, translucent pane, which reflects the light in such way that it reaches the so-called eyebox. The eyebox is an area whose height and width correspond to a theoretical viewing window. As long as an eye of the viewer is located inside the eyebox, all elements of the virtual image are visible to the eye. If, on the other hand, the eye is located outside the eyebox, the virtual image is only partially or not at all visible to the viewer. The larger the eyebox is, the less restricted the viewer is in his choice of sitting position.

The viewer sees the content displayed by the picture generating unit as a virtual image and at the same time the real world behind the translucent pane. In the automotive sector, the windscreen often serves as a mirror unit, the curved shape of which must be taken into account in the representation. However, the mirror unit may also be a dedicated screen, called combiner. Through the interaction of the optical unit and the mirror unit, the virtual image is an enlarged representation of the image generated by the picture generating unit.

The picture generating unit and the optical unit of a head-up display are typically arranged in a common housing assembly, which may also include electronic components necessary for operation of the head-up display. The housing assembly may be sealed with a cover glass and protects the various components from damage as well as dust or other environmental influences. Furthermore, the housing assembly helps to simplify mounting of the head-up display in a vehicle, as all necessary components can be installed in a single production step.

Current head-up display solutions typically comprise a picture generating unit that uses a liquid crystal display (LCD) for creating the image to be displayed. High brightness requirements for the display used in a head-up display unit lead to a series of problems when an LCD is used in a head-up display, which are mainly due to the low transmittance.

A first issue is the high thermal impact due to the heat generated by the backlight unit and the luminous power dissipated by the absorption in the display panel of around 95% of the incoming light. Critical aspects in this regard are the clearing temperature of the liquid crystal and the temperature performance of the polarizers attached to the liquid crystal panel. If the temperature of the polarizers exceeds a certain limit, the polarizer may lose its light polarizing properties and the display becomes bright where it should be dark or vice versa. If the temperature of the liquid crystal exceeds the clearing temperature, the liquid crystal may lose its light polarizing properties and the display becomes transparent.

A second issue is the high power consumption required for achieving the high brightness of the backlight, which usually is in the order of 10 W or more for problematic applications, independent of the actual display content.

Head-up displays require very bright backlight in order to generate a virtual image that is visible even under bright outside light conditions. In HUD most display areas are black, as usually only symbols are shown. This means that a large part of the backlight is dissipated in the display causing heat. Liquid-crystal materials do not operate properly above a certain temperature, the so-called clearing temperature. It is desired to keep the liquid-crystal materials temperature below the clearing temperature. It is known to provide a backlight that consists of an array of light sources that can be dimmed or completely turned on or off independently of each other. In this way local dimming can be implemented for areas of the image where less bright or completely dark elements are to be visible. The respective dimming saves power and reduces the overall heat generated by the light sources. This results in lower heat load of the display panel.

US 2019/369392 A1 relates to a picture generating unit for a head-up display. It comprises a two-dimensional array of light sources which can be dimmed independently of each other. A disadvantage of an inhomogeneous light intensity distribution shall be reduced by using a collimating lens and a micro lens array per light source. An even more homogeneous light intensity distribution is desirable.

US 2021/405450 A1 relates to a head-up display with local dimming functionality. A two-dimensional array of light sources is used. Each light source is provided with a biconic lens. Such biconic lenses might be regarded as expensive parts.

US 2021/294161 A1 relates to a head-up display with local dimming functionality. A two-dimensional array of light sources is used. For collimating the light emitted by the light sources a hollow reflector is provided for each light source, the hollow reflector having tapered side walls with curved shape. Such reflector might be regarded expensive if designed to provide highly efficient collimation of light.

It is an object of the present invention to provide an improved solution for a head-up display with local dimming backlight.

This object is achieved by a head-up display unit according to claim 1 and a vehicle according to claim 11. The dependent claims include advantageous further developments and improvements of the present principles as described below.

A head-up display unit according to the invention comprises a picture generating unit for creating an image to be displayed as a virtual image to a viewer, an optical unit for projecting the image to be displayed towards an eyebox. The picture generating unit comprises a two-dimensional array of light sources, an array of reflectors for collimating light emitted by the light sources, each of these reflectors having tapered sidewalls. The display panel receives collimated light from the array of reflectors and modulates the received light with image information, and emits said modulated light as image to be displayed. According to the invention each reflector consists of a transparent solid-state body, having light entrance surface, light exit surface and tapered light reflecting sidewalls. This has the advantage that each beam of light entering the light entrance surface interacts with the light passing the light entrance surface, so that light properties can be controlled by the properties of the light entrance surface. Such properties are for example a curvature, as e.g., the curvature of converging lens, a coating applied to the light entrance surface, microstructures of the light entrance surface, etc. Also, the light exit surface interacts with the light passing through it, so that light properties can advantageously be controlled. The tapered sidewalls advantageously provide high light efficiency due to their tapered shape and total internal reflection (TIR) and they provide good collimation efficiency due to multiple reflections. The tapered sidewalls may have a curved shape or a straight shape. The expression tapered is used herein in the following sense: Tapered sidewalls extend along a main direction of light propagating through a reflector from its light entrance surface to its light exit surface on the way of the light from a light source to the display panel. These sidewalls define a cross section perpendicular to said main direction of light. This cross section widens from the light entrance side of the reflector to the light exit side of the reflector. This widening may for example happen as a linear function with distance from light entrance surface thus creating a tapered reflector with straight shape. This widening may for example happen along curved sidewalls thus creating a tapered reflector with curved shape. The widening may also happen with a combination of several linear functions having different slopes or as stepwise change in cross section size. The solid-state body advantageously allows for coupling in of light with a wider angle distribution than would be possible with a hollow reflector, as the light beams entering through the light entrance surface are always reflected towards the perpendicular.

According to an aspect of the invention the reflectors are long and thin in the direction of light passing through them from light entrance surface to light exit surface. This has the advantage that a long, thin solid-state body reflector provides for total internal reflection (TIR) without the need for any reflective coating. Providing such reflective coating on a long thin hollow body is complicated and expensive if it is at all possible in a reliable quality. This problem is avoided according to the invention. Further advantage is that reflection on sidewalls is nearly independent of wavelength, compared to refraction, e.g. when using lenses, which require complex measures to compensate for wavelength-dependent effects.

According to an aspect of the invention the reflectors exhibit a length-to-diameter ratio LDR of LDR> 4, preferably LDR>4.4, even more preferably LDR>4.433, where in the length L is the mean distance between light entrance surface and light exit surface, and the diameter is the maximum distance between two points of the light entrance surface. Size and shape of the light entrance surface are preferably adjusted to match the emission size / emission profile of the light source used with the respective reflector. The output aperture at the light exit surface is limited by the size of a dimming cell in case the head-up display unit is provided with a local dimming functionality. Such local dimming functionality usually divides the light emitting area of the backlight unit into different cells that can be dimmed independently, to realize a so-called local dimming.

The maximum distance between two points of the light entrance surface in case of a circular light entrance surface is the length of the geometrical diameter of the circular light entrance surface. In case of a square light entrance surface or a rectangular light entrance surface the maximum distance is the length of the diagonal of the square or the rectangle, respectively. The mean distance between light entrance surface and light exit surface is preferably defined by the distance between the geometrical centre of these respective surfaces. The so defined length L is advantageously by factor of four or more larger than the so defined diameter.

This provides for an efficient collimation, so that the bundle of light that exits the light exit surface has a smaller angle distribution than the light bundle entering the light entrance surface. An additional benefit from the flexible output aperture of the light exit surfaces is that the dimming function and crosstalk between neighbouring cells can be improved. The output aperture is advantageously adapted to the size of the local dimming cell on the display panel. If a single light source / a single dimming cell is switched off, it only influences the illumination of the respective dimming cell on the display panel, but not the respective neighbouring cells. A local dimming cell on the display panel that does not have any content to display at a certain instance can thus be not illuminated at all by controlling the respective light source / the respective dimming cell to be switched off.

According to an aspect of the invention a connecting plate is arranged at the light exit surface of the reflector array. The connecting plate is for example a glass plate to which the light exit surface of the reflectors are optically bonded. The connecting plate may also consist of another transparent material. The connecting plate may also be designed as a grating, that connects the reflectors at their light exit surface side without covering the light exit surface. Connecting the reflectors at their end that is distant to the array of light sources has the advantage of providing mechanical stability. Further, if the connecting plate covers also the light exit surface of the reflectors, then an additional function may be integrated into the connecting plate, such as a lens, micro-lenses, diffusers, or the like.

According to an aspect of the invention the light entrance surface and the light exit surface of the reflectors are arranged parallel to each other. In case that the main axis of the reflectors is perpendicular to the light entrance surface and to the light exit surface the created light distribution will be symmetric and optimally collimated.

A reduced distance between a plane on which the array of light sources is arranged and the plane of the light exit surface is advantageously reached if the reflectors are arranged with their main axis slanted to the normal direction of these planes. The light exiting the light exit surfaces is then also slanted with regard to the perpendicular (the normal direction) of these planes.

According to an aspect of the invention the plane in which the display panel is arranged is arranged parallel to the planes in which light entrance surface and the light exit surface, respectively, are arranged. This provides for a compact design size with tilted arrangement of the display panel with regard to the main axis of the light bundles passing through the display panel. Such tilted arrangement is desired for several reasons in the use for head-up displays. Disturbing sunlight that enters along the main axis but in opposite direction than the light carrying the display to be displayed is in the case of tilted arrangement reflected out of the main axis. Further, in case of tilted arrangement the virtual image is projected into a tilted plane that provides a depth effect to the user.

According to an aspect of the invention the light entrance surface and the light exit surface of the reflectors are arranged slanted with regard to each other. If the light entrance surface and the light exit surface are slanted for each reflector in the same amount, and the lengths of the reflectors are all the same a compact building space is advantageously reached. Also, a same light distribution for all reflectors is reached, while the resulting angle of the light might have a suitable tilt relative to the display panel. Eventually, further elements like a direction turning film may advantageously be added in order to increase or adjust the tilt to a desired tilt value.

If the light entrance surface of all reflectors of the array of reflectors are arranged in a light entry plane and the light exit surfaces of all reflectors of the array of reflectors are arranged in a light exit plane, and if these planes are slanted with regard to each other, the effective collimating lengths of the reflectors differ from each other. This leads to different degrees of collimation, i.e. the divergence of the light bundle exiting from shorter reflector is larger than that of a longer reflector. This is especially desirable if the plane in which the virtual image is seen is slanted. Areas of this plane that are closer to the user are then arranged with larger divergence than areas more remote to the user. This provides the same or at least a similar divergence character as real light sources when arranged at different distances would provide.

According to an aspect of the invention the centre axis of at least one of the reflectors is curved. Advantageously the curved centre axis of the reflectors leads to a longer effective distance between light entrance surface and light exit surface then it is the case for reflector having straight centre axis. Thus, the difference in divergence is reached while the distance between planes of light entrance surfaces and light exit surfaces of both types of reflectors can be made identical.

According to further aspects of the invention at least one of a pitch in the direction of a main axis of the array of reflectors, and/or a slanting angle of the light entrance surface and/or the light exit surface of a reflector, and/or a distance between light entrance surface and light exit surface of a reflector, and/or a distance between light exit surface of a reflector to the display panel, and/or a shape of the reflector, is adapted to the requirements of the picture generating unit. This has the advantage that by adaptation of at least one of these geometrical parameters of the reflector and/or another geometrical parameter it is made possible to generate an optimised angle distribution / a desired divergence and to optimise the light distribution in the eyebox. It also advantageously makes possible to optimise homogeneously distribution in case of local dimming.

According to an aspect of the invention a head-up display unit has a two-dimensional array that comprises more than thirty to forty, preferably eighty light sources that are dimmable independently of each other. This has the advantage that the lighting for the display panel is made dimmable in comparatively small areas and that thus local dimming is possible in a more meaningful way with comparatively high resolution. Preferably eight rows or more with ten light sources or more, each, are used. An even higher number of more than hundred light sources is desirable.

A vehicle advantageously comprises a head-up display unit according to the invention.

Further features of the present invention will become apparent from the following description and the appended claims in conjunction with the figures.

### Figures

- Fig. 1: shows a sketch of a state-of-the-art head-up display for a motor vehicle;
- Fig. 2: shows a sketch of a head-up display according to the invention;
- Fig. 3: shows a simplified sketch similar to Fig.2;
- Fig. 4: shows a picture generating unit of a first embodiment;
- Fig. 5: shows a picture generating unit of a second embodiment;
- Fig. 6: shows a picture generating unit of a third embodiment;
- Fig. 7: shows exemplary reflectors;
- Fig. 8: shows an example with a reflector having a curved centre axis;
- Fig. 9: shows a diagram of a part of a head-up display; and
- Fig. 10: shows another example with reflectors having curved centre axes.

### Detailed description

For a better understanding of the principles of the present invention, embodiments of the invention will be explained in more detail below with reference to the figures. Like reference numerals are used in the figures for the same or equivalent elements and are not necessarily described again for each figure. It is to be understood that the invention is not limited to the illustrated embodiments and that the features described may also be combined or modified without departing from the scope of the invention as defined in the appended claims.

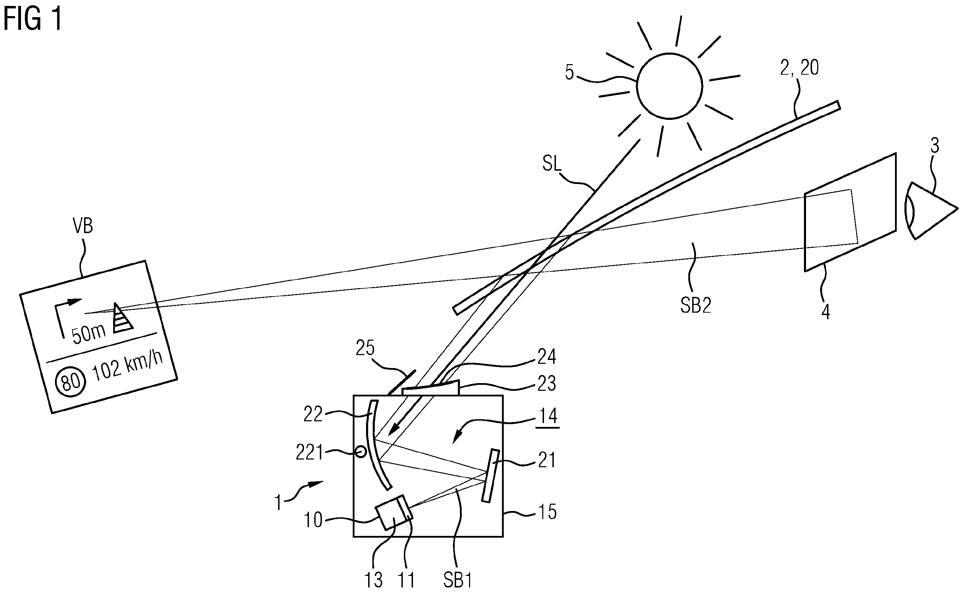

Fig. 1 shows a sketch of a state-of-the-art head-up display unit 1 for a motor vehicle. The head-up display unit 1 has a picture generating unit 10, an optical unit 14 and a mirror unit 2. The picture generating unit 10 is provided with a backlight unit 13 that generates light that passes through a display panel, herein below mainly described as liquid crystal display 11. A beam SB1 emanates from a liquid crystal display panel 11 of the picture generating unit 10 and is reflected by a folding mirror 21 onto a curved mirror 22, which reflects it in the direction of the mirror unit 2. The mirror unit 2 is shown here as a windscreen 20 of the motor vehicle. From there, the beam SB2 is directed towards the eye 3 of an observer.

The observer sees a virtual image VB, which is located outside the vehicle above the bonnet or even in front of the vehicle. Due to the interaction of the optical unit 14 and the mirror unit 2, the virtual image VB is an enlarged representation of the image displayed by the display panel 11. Here a symbolic speed limit, the current vehicle speed and navigation instructions are displayed. As long as the eye 3 is located inside the eyebox 4 indicated by a rectangle, all elements of the virtual image VB are visible to the eye 3. If the eye 3 is located outside the eyebox 4, the virtual image VB is only partially or not at all visible to the viewer. The larger the eyebox 4 is, the less restricted the viewer is in his choice of the seating position.

The curvature of the curved mirror 22 is adapted to the curvature of the windscreen 20 and ensures that the image distortion is stable over the entire eyebox 4. The curved mirror 22 is rotatably supported by a bearing 221. By rotating the curved mirror 22, it is possible to shift the eyebox 4 and thus to adjust the position of the eyebox 4 to the position of the eye 3. The folding mirror 21 ensures that the distance travelled by the beam SB1 between the display panel 11 and the curved mirror 22 is long, while, at the same time, the optical unit 14 remains compact. The optical unit 14 and the picture generating unit 10 are accommodated in a housing assembly 15 and may be separated from the environment by a transparent cover 23. The optical elements of the optical unit 14 are thus protected, for example, against dust inside the vehicle. An optical foil or polarizer 24 can be located on the cover 23. The display panel 11 is typically polarized and the mirror unit 2 acts like an analyser. The purpose of the polarizer, or glare trap, 24 is to influence the amount of sunlight entering the head-up display. A light trap 25 serves to securely shield light reflected from the road or to block light from different sources placed at car height level so that it does not reach the observer. In addition to sunlight SL coming from the sun 5, also light from another source of interference might reach the display panel 11.

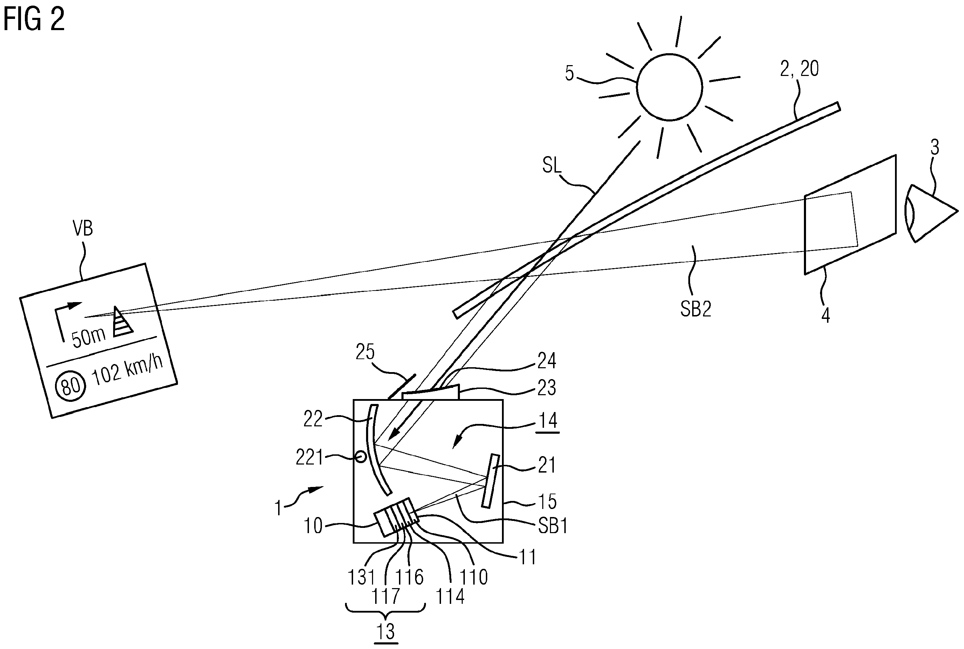

Fig. 2 shows a sketch of a head-up display according to the invention. The head-up display is similar to the head-up display of Fig. 1, but the picture generating unit 10 is diagrammatically shown with elements according to the invention. The liquid crystal display panel 11 is diagrammatically depicted as being provided on an optical plate 110. A free space 114 is provided between the optical plate and a connecting plate 116. The connecting plate 116 is arranged on the light exiting plane of a reflector array 117 consisting of several tapered reflectors (not shown). An array 131 of light sources is arranged at a light entering plane of the reflector array 117. The array 131 of light sources is arranged on a printed circuit board (not shown here) which is connected with some control electronics (not shown here). The connecting plate 116, the reflector array 117 and the array 131 of light sources are parts of the backlight unit 13. Sizes and distances as shown here are not to scale. More details regarding size and scale can be seen in some of the following figures.

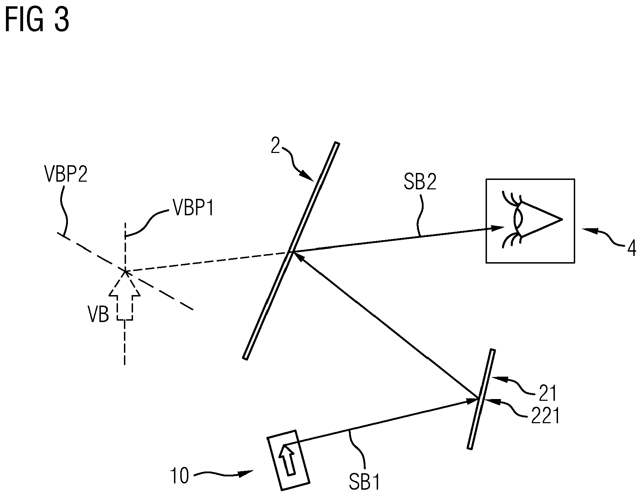

Fig.3 shows a simplified sketch similar to Fig.2. Here, only a single mirror, folding mirror 21, is shown. A Head-up Display, also referred to as HUD, is used to place information in the field of view of the user in such a way as to appear integrated in the surrounding environment. The intention is to provide the information in a way that does not require the user to significantly change the eye gaze direction and/or focus distance. HUDs are of particular importance in avionics and the automotive fields where they allow the vehicle's operator to glance important aspects of the trip without taking the eyes away from the path ahead. For this purpose, state of the art HUDs are required to deliver this information clearly discernible, independent of the ambient light level. One of the preferred architectures for HUDs, as depicted in the figure, comprises a picture generating unit 10, an intermediate mirror, the folding mirror 21, and a transparent HUD screen, the mirror unit 2. As a note, this diagram should be understood as one of the possible embodiments and should not be regarded as restrictive to the present invention.

The picture generating unit 10 is responsible for producing the symbols that shall be visible to the end user. The optical system from the depicted embodiment, consisting of the folding mirror 21 and the HUD screen, mirror unit 2, is designed in such a way as to produce a virtual image VB from the images generated by the picture generating unit 10 that are magnified and seen at a certain distance in front of the mirror unit 2. As a note, the mirror unit 2 is formed with the aid of an optically clear medium in order to not impede the visibility of the end user's environment. This mirror unit 2 may be a dedicated component, typically called combiner, or it may be formed as a region on the vehicle's windshield.

If the liquid-crystal display panel 11 (not shown here) is not our only slightly slanted with regard to the main direction of the beam of light SB1, then the virtual image plane VBP1 is oriented nearly perpendicular to the road surface. The user recognises the virtual image VB as being arranged nearly perpendicular to the road surface, similar as he is used to see displays in the instrument cluster. In case that the liquid crystal display panel 11 (not shown here) is noticeably slanted with regard to the main direction of the beam of light SB1, then also the virtual image plane VBP2 is noticeably slanted with regard to the perpendicular (the normal direction) of the road surface. Image elements displayed in the upper part of the virtual image appear more distant to the user then those displayed in the lower part of the virtual image. The user thus gets a three-dimensional impression, even though the liquid crystal display panel 11 is flat and does not provide 3D functionality.

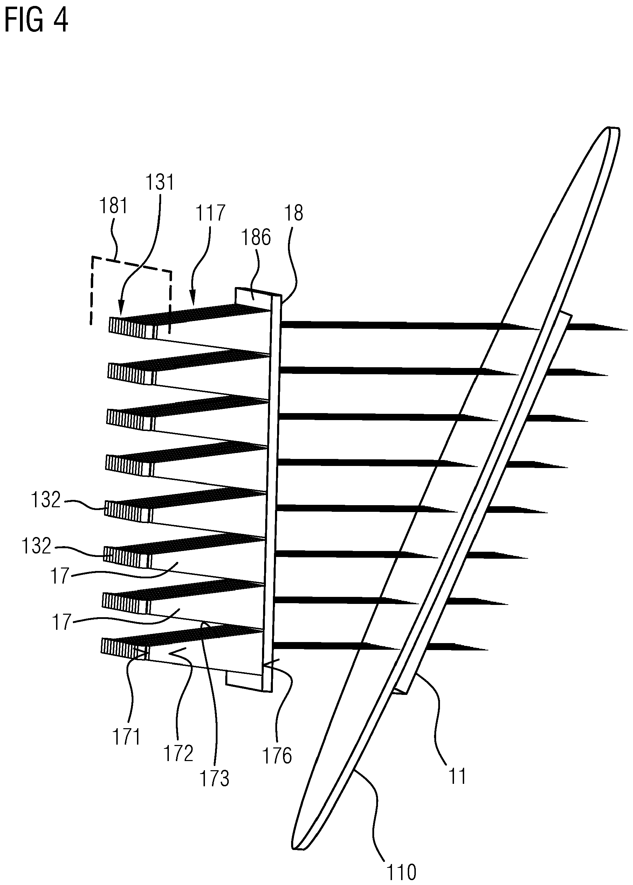

Fig.4 shows a picture generating unit of a first embodiment of a head-up display according to the invention in a perspective view. On the left side an array 131 of 8×12 light sources is shown. The light sources are light emitting diodes 132, also referred to as LED. For each light emitting diode 132 a solid-state body reflector 17 is arranged. The reflectors 17 form reflector array 117 consisting of 8×12 reflectors 17. Adjacent to the light emitting diode 132 a light entrance surface 171 of the reflector 17 is arranged. Light emitted from the light emitting diode 132 arrives at the light entrance surface 171 of the reflector 17, is refracted by this surface and enters the solid-state body of the reflector 17 through this surface. At the opposite end of the reflector 17 a light exit surface 176 is provided. Tapered walls 172, 173, 174, 175 extend from the light entrance surface 171 to the light exit surface 176. In the embodiment shown here the tapered walls 172, 173, 174, 175 have a trapezoid shape. The light entrance surfaces 171 of all reflectors 17 of the reflector array 117 are arranged in the same entrance side plane 181. This entrance side plane 181 is indicated by dashed lines in the upper part only, to not overload the drawing. The light exit surfaces 176 of all reflectors 17 of the reflector array 117 are arranged in the same exit side plane 186. The light exit surfaces 176 of all reflectors 17 are connected to the connecting plate 18. This connection is realised by optical bonding. Optical bonding can be made by use of a bonding liquid that is cured, by applying solid-state glue, e.g. in form of tape or applied from the tape. It is also possible that all reflectors 17 and the connecting plate 18 are provided as a single element, for example a diecast element. The optical functionality that connecting plate 18 might have is for example reached by applying micro-lenses or micro-prisms on the top surface to modify the angular light distribution or direction. Also, a global lens or a Fresnel lens or a diffusor can advantageously be applied here.

After having propagated through the reflectors 17 from there light entrance surface 171 to the light exit surface 176 and through the connecting plate 18 the light travels to the optical plate 110 on which the liquid crystal display panel 11 is arranged. The plate 110 is tilted with regard to the main direction of the light passing through it. The display panel 11 modulates the received light with image information, as is known for liquid crystal display technology and does not need to be furthered here.

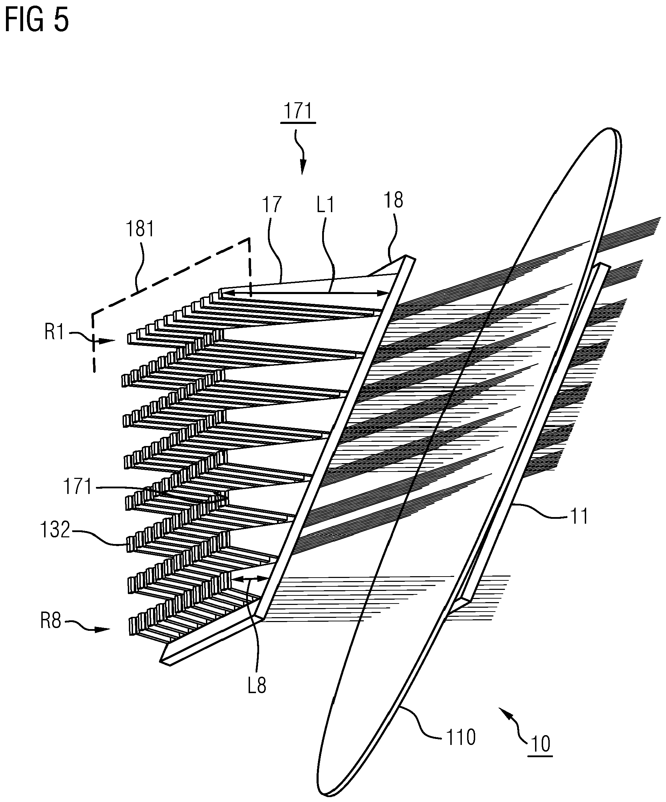

Fig.5 shows a picture generating unit of a second embodiment of a head-up display according to the invention. In this embodiment the reflectors 17 are arranged in 8 rows Rn, each having 12 reflectors. All reflectors of a single row n have the same length Ln, while the length L from row to row decreases from L1 being the longest to L8 being the shortest. All light entrance surfaces 171 are arranged in the same entrance side plane 181 of light entrance surfaces which is indicated by dashed lines. All light sources 132 of the array 131 of light sources are arranged in a plain that is parallel to the entrance side plane 181. The connecting plane 18 is tilted with regard to the entrance side plane 181 and arranged parallel to the plane of the liquid crystal display panel 11. The light exiting the reflectors 17 of row R1, having the longest length L1 provide exiting light having a smaller collimated angle than the shortest reflectors 17 of row R8.

Looking at the slanted virtual image plane VBP2 of Fig.3, the image elements of the upper part of the virtual image VB receive backlight from the reflectors 17 of row R1 of the embodiment shown in Fig.5 which is collimated at small angle, while image elements of the lower part of the virtual image VB receive backlight from the reflectors 17 of row R8 which is collimated at a wide angle. This corresponds to the effect that image elements in the upper part of the virtual image VB shown on the slanted virtual image plane VBP2 appear more distant to the user than those in the lower part. Advantageously the user gets consistent distance information not only in view of focal distance but also in view of divergences of the received light. The user's brain does thus not need to compensate for inconsistent viewing information and thus keeps the user more aware for other information to observe. This increases security of the overall system.

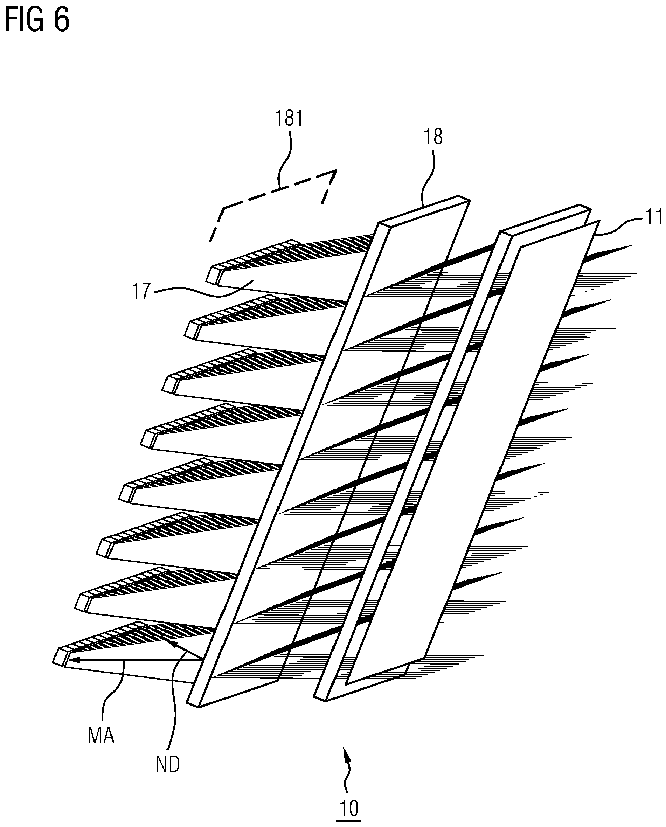

Fig.6 shows a picture generating unit of a third embodiment of a head-up display according to the invention. Here, the entrance side plane 181, the connecting plate 18 and the plane in which the liquid crystal display panel 11 is arranged are parallel to each other. The reflectors 17 have a main axis MA that is slanted to the normal direction ND of the connecting plate 18. The main axis of the light bundles passing through the liquid crystal display panel 11 are thus also inclined with regard to the liquid-crystal display panel 11. A compact design of the picture generating unit 10 is thus provided for. The tilting of the light source surface has an advantage of larger distance to each other. This will reduce the light source density thus decrease the thermal issue. Which is currently a huge problem especially for the system has more than hundred LEDs for better resolution of local dimming function.

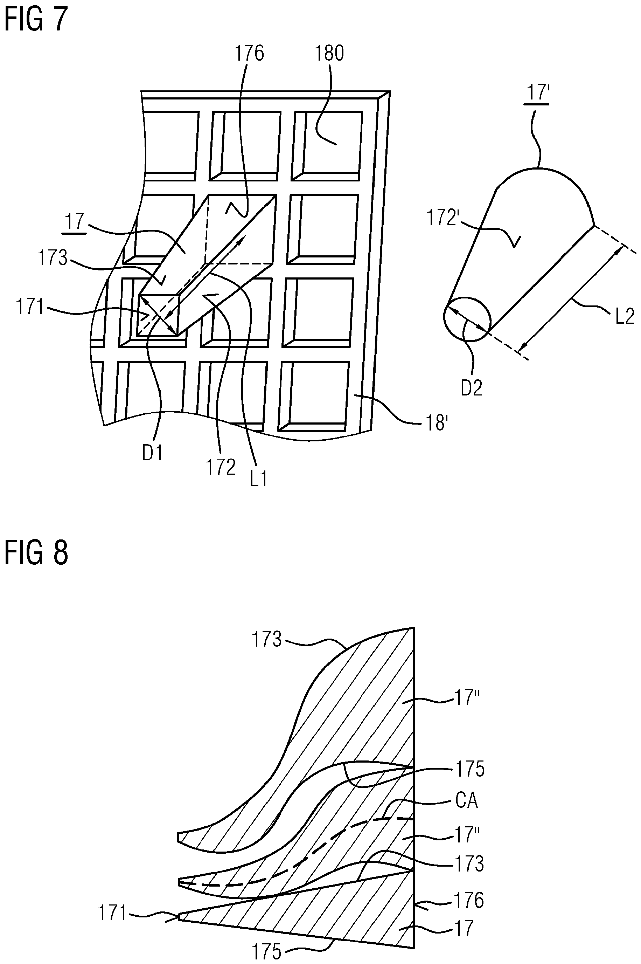

Fig. 7 shows exemplary reflectors 17, 17'. On the left side an exemplary reflector 17 is shown with its light entrance surface 171 directed to the viewer. This light entrance surface 171 has the shape of a square with diameter D1 indicated as a double arrow being assumed as the diagonal of the square. Tapered walls 172 and 173 extend to the light exit surface 176. Length L1 of the reflector 17 is indicated by a double arrow. The length to distance ratio LDR=L1/D1 is larger than 4. The reflector 17 is accommodated, at its light exit surface 176 side, by a connecting plate 18' which is a great having many openings 180 into which the light exit surface 176 side of the reflector 17 is affixed to. In this example, the reflector 17 and thus the light guided by the reflector 17 passes through an opening 180. The connecting plate 18' does thus not have to be provided with special optical properties. On the right side another example reflector 17' is shown having circular light entrance surface 171 and light exit surface 176 and conical tapered wall 172'. Here, too, diameter D2 and length L2 are indicated by double arrows and the length to distance ratio LDR=L2/D2 is larger than 5. The length L is defined as the mean distance between the light entrance surface 171 and the light exit surface 176, and the diameter D is defined as the maximum distance between two points of the light entrance surface 171, as mentioned with regard to the 2 examples shown here. According to another embodiment that is not shown here the light entrance surface 171 has a rectangular shape with a ratio of longer side to shorter side of about 2:1, and the light exit surface 176 has a rectangular shape with a ratio of longer side to shorter side of about 7:9. According to still another embodiment also not shown here, the light entrance surface 171 and the light exit surface 176 have hexagonal shapes. The smallest gap between reflectors is limited by the current industry technology due to the demolding process, in this case it is in the order of 1.0mm. Using silicone as the material for the reflectors 17 makes possible smaller distances in the range of about 0.3mm.

Fig.8 shows an example with a reflector 17" the centre axis CA of which is curved. In the lower part of the figure a reflector 17 with light entrance surface 171 and light exit surface 176 and tapered sidewalls 173 175 is shown. These sidewalls are straight in this cut view. In the middle and above examples of reflectors 17" are shown having a curved centre axis CA. As the centre axis CA is curved, also the respective sidewalls 173" and 175" our curved. The curvature is depicted here in an exaggerated way. In practice the curvature is thus that the reflector 17" is tapered and still has the light collimator function due to total internal reflection at the curved sidewalls 172 to 175. Although not shown here, the reflector 17 of another example is tapered in opposite than shown here. Its light entrance surface 171 is thus larger than its light exit surface 176. In this way light generated by large size light sources can be concentrated onto a smaller size display panel. Heat dissipation away from the light sources is in this case made easier due to their large surface.

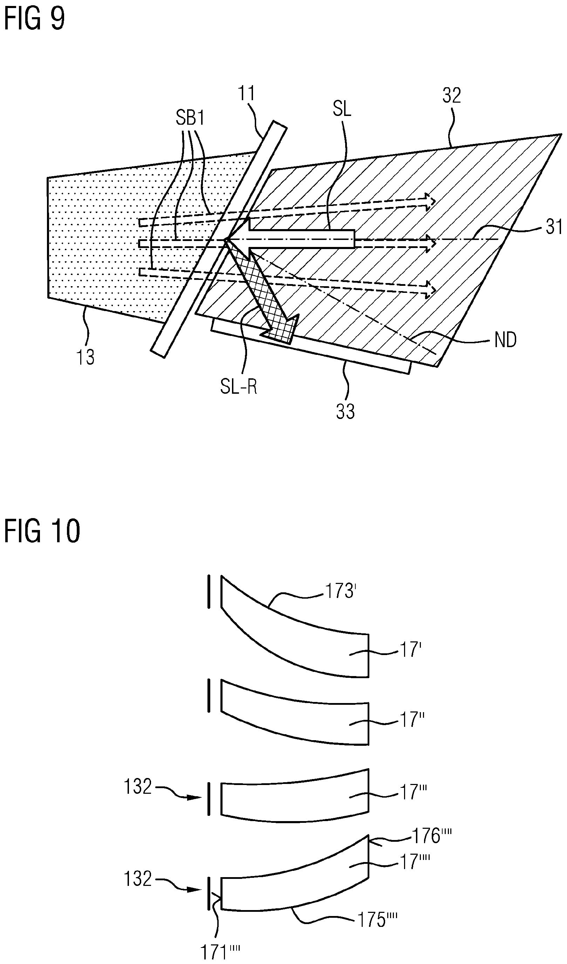

Fig.10 shows another example with reflectors 17', 17", 17‴, 17ʺʺ the centre axes of which are curved. The tapering is in the same direction as shown in Fig.8, but the light sources 132 are more distant from each other. Thus, the tapered walls 173'-173ʺʺ and 175'-175ʺʺ are curved in a way to get to light exit surfaces 176'-176ʺʺ that are closer together and fill a smaller area than the respective light entrance surfaces 171'-171ʺʺ having much more interspace between each other. In this way, too, a better cooling effect of the light sources 132 can be reached as these are further spaced apart from each other.

A pitch in the direction of a main axis of the array 117 of reflectors 17 is preferably adapted to the requirements of the picture generating unit by choosing a ratio of pitch within a row R1,...,R8 to pitch between the rows R1,...,R8 to be in the range of 4:5. A slanting angle of the light entrance surface 171 of a reflector 17 is preferably adapted to the requirements of the picture generating unit by choosing a slanting angle of 0°. A slanting angle of the light exit surface1 76 of a reflector 17is preferably adapted to the requirements of the picture generating unit by choosing a slanting angle of less than 23°. A distance between light entrance surface 171 and light exit surface 176 of a reflector 17 is preferably adapted to the requirements of the picture generating unit by choosing such distance being at least twice the length of the diameter D of the light entrance surface 171. A distance between light exit surface 176 of a reflector 17 to the display panel 11 as well as a shape of the reflector 17, are preferably adapted to the requirements of the picture generating unit. These mentioned parameters are to be optimized such that a good homogeneity and efficiency is reached but also that for local dimming the cross talk is minimized between the cells. A cell is usually defined by a single light source 132 with respective reflector 17. In some embodiments, that are not shown here, several light sources are assigned to a single reflector 17, and these elements constitute a cell for local dimming. For example, light sources of different colour or with different spectral composition are grouped together and controlled together so as to produce light of a desired wavelength composition.

Fig.9 shows a diagram of a part of a head-up display. A backlight unit 13 generates light that passes through the liquid crystal display panel 11 and a light collimator 32. In state of the art HUD applications, in order to prevent the reflection of the sunlight SL entering the HUD optical path along the main optical axis 31 and reaching the display panel 11 surface back towards, potentially, the end user of the system, the display panel 11 assembly is typically placed at an angle relative to the main optical axis 31, as seen in the figure showing that the normal direction ND is inclined to the HUD main optical axis 31.

The light collimator 32 prevents the light generated by the HUD having a high inclination relative to the optical axis to exit the system and thus, prevents unwanted reflections inside the vehicles cabin. At the same time, the collimator 32 also limits the amount of external light, e.g. sunlight SL, that is capable to reach the display panel 11 surface, as again, light having a high inclination relative to the main optical axis 31 will be blocked by the collimator's walls. This effectively limits the positions from which the sunlight SL can pose a problem to the display assembly. However, the high tilting angle of display could bring difficulties to a good homogeneity design. The tapered light guide with tilted output aperture according to one aspect of the invention may advantageously be used to redirect the light propagating direction and thus reduce the display tilting angle. In addition to this, typically there will also be a polarizer film placed in the optical path upstream to the display unit. This polarizer is aligned such that the polarized light produced by the HUD is able to pass through it with very little attenuation. However, the polarizer will substantially reduce (by around 50%) the amount of external light that can enter the HUD system by eliminating the light with the polarization plane perpendicular to the polarizer plane.

As any light that is reflected back in a direction parallel to the main optical axis 31 is, from the optical system's perspective, indistinguishable from the useful light SB1 generated by the display panel 11, the end user may be affected by it as this reflected sunlight SL may obscure the information that must be displayed by the HUD system. For this reason, state of the art HUD systems have the display panel 11 tilted relative to the optical axis 31 so any reflected sunlight SL-R that gets reflected from the display panel 11 surface is deviated towards a light trap 33 from the collimator's walls. In this way, the front surface of the display panel 11 may well have a higher reflectivity than other state of the art display panels used in non-HUD applications without significant impact on the images produced for the end-user. In fact, the higher the reflectivity, the lower the amount of sunlight that can pass into the display panel 11, easing the thermal stress at which the display panel is subjected.

Display back lights for usual displays that are provided with a local dimming functionality usually make use of LED matrix arrays, where the light is not collimated and where large viewing angles are desired. Head-up displays are usually provided without local dimming functionality. Hitherto, only demonstrators for head-up displays with local dimming function are shown so far, but no product is seen in the market yet. No economically reasonable solution has been found up to now. Most head-up displays are provided with a backlight unit having a limited number of light sources, so that a meaningful local dimming effect can hardly be reached.

Local dimming backlights from usual display systems have a too broad angular efficiency as to be meaningfully used in head-up displays. Usual head-up display units' backlight units do not have enough light sources to provide a good, reasonable number of local dimming zones. No viable solution to provide a backlight unit with a sufficiently large number of local dimming zones is known up to now. Creating a homogeneous and efficient backlight is difficult because the available area per light source that can be used for collimation is limited when the number of light sources is increased. The present invention allows to provide a head-up display with a backlight unit having about 100 local dimming zones, with optimized efficiency, homogeneity and building space. For automotive headlamps with matrix LED systems collimation tapers, often made out of silicone, are used. These tapers can be brought very close to the LED and therefore collect the light efficiently.

According to the invention such a system is adapted to be used in head-up display units. An array of tapered collimators is arranged above an array of light sources. In this configuration an étendue limited system, with very good homogeneity and efficiency, as well as reduced cross talk between local dimming zones is realized. In contrast to headlamps the system needs to be specifically designed to achieve a good homogeneity distribution on short distances. Particular advantages of a head-up display unit according to the invention are that the picture generating unit 10 has a small height, that cross talk is reduced, that a good homogeneity of the light generated by the picture generating unit is reached, and that additional picture generating unit components can be integrated on a top side of the array of reflectors, like a lens component or diffusor components.

## Claims

1. A head-up display unit (1), the head-up display unit (1) comprising
- a picture generating unit (10) for creating an image to be displayed as a virtual image (VB) to a viewer,
- an optical unit (14) for projecting the image to be displayed towards an eyebox (4), the picture generating unit (10) comprising
- a two-dimensional array (131) of light sources (132),
- an array (117) of reflectors (17,17') for collimating light emitted by the light sources (132), each of these reflectors (17,17') having tapered sidewalls (171, 172, 173, 175),
- a display panel (11) for receiving collimated light from the array (117) of reflectors (17,17') for modulating the received light with image information (), and for emitting said modulated light (SB1) as image to be displayed,
**characterised in that** each reflector (17,17') consists of a transparent solid-state body, having a light entrance surface (171), a light exit surface (176) and tapered light reflecting sidewalls (172, 173, 174, 175).

2. Head-up display unit (1) according to claim 1, wherein the reflectors (17,17') are long and thin in the direction of light passing through them from light entrance surface (171) and light exit surface (176).

3. Head-up display unit (1) according to anyone of the preceding claims, wherein the reflectors (17,17') exhibit a length-to-diameter ratio (LDR) of LDR>4, wherein the length (L) is the mean distance between light entrance surface (171) and light exit surface (176), and the diameter (D) is the maximum distance between two points of the light entrance surface (171).

4. Head-up display unit (1) according to anyone of the preceding claims, further comprising a connecting plate (18,18') arranged at the light exit surface (176) of the reflector array (117).

5. Head-up display unit (1) according to anyone of the preceding claims, wherein the light entrance surface (171) and the light exit surface (176) of the reflectors (17,17') are arranged parallel to each other.

6. Head-up display unit (1) according to claim 5, wherein the plane () in which the display panel (11) is arranged is arranged parallel to the planes () in which the light entrance surface (171) and the light exit surface (176), respectively, are arranged.

7. Head-up display unit (1) according to anyone of the preceding claims 1 to 4, wherein the light entrance surface (171) and light exit surface (176) of the reflectors (17,17') are arranged slanted with regard to each other.

8. Head-up display unit (1) according to anyone of the preceding claims, wherein the centre axis (CA) of at least one of the reflectors (17") is curved.

9. Head-up display unit (1) according to anyone of the preceding claims, wherein at least one of
- a pitch in the direction of a main axis of the array (117) of reflectors (17),
- a slanting angle () of the light entrance surface (171) and/or the light exit surface (176) of a reflector (17),
- a distance between light entrance surface (171) and light exit surface (176) of a reflector (17),
- a distance between light exit surface (176) of a reflector (17) to the display panel (11),
- a shape of the reflector (17),
is adapted to the requirements of the picture generating unit (10).

10. Head-up display unit (1) according to anyone of the preceding claims, wherein the two-dimensional array (131) comprises more than thirty light sources (132) that are dimmable independently of each other.

11. Vehicle comprising a head-up display unit (1) according to anyone of the preceding claims.
